# EUROPÄISCHE PATENTSCHRIFT

(11) **EP 0 759 514 B1**
(45) Veröffentlichungstag und Bekanntmachung des Hinweises auf die Patenterteilung: **27.03.2002**
(21) Anmeldenummer: 96110601.0
(22) Anmeldetag: 01.07.1996
(51) Int. Cl.: F16D 48/06, B60K 41/02

(54) **Steuerung einer automatischen Kupplung in Abhängigkeit von Bremswirkung**
Automatic clutch control as a function of brake signal
Régulation d'un embrayage automatique en fonction de l'application des freins

(30) Priorität: 21.08.1995 DE 19530612
(43) Veröffentlichungstag der Anmeldung: 26.02.1997
(73) Patentinhaber: DaimlerChrysler AG, 70567 Stuttgart (DE)
(72) Erfinder: Kosik, Franz, 73760 Ostfildern (DE); Wörner, Günter, 71394 Kernen (DE)

(56) Entgegenhaltungen:
- EP-A- 0 239 416
- EP-A- 0 375 162
- WO-A-96/00844
- DE-A- 4 426 260

## Beschreibung

Die Erfindung betrifft eine zwischen Motor, insbesondere Verbrennungsmotor, und Antriebstrang eines Kraftfahrzeuges angeordnete automatisch gesteuerte Kupplung, die unterhalb eines geringen Schwellwertes der Fahrgeschwindigkeit automatisch in einem Schlupfzustand mit begrenztem übertragbaren Moment arbeitet und bei Betätigung einer Betriebsbremse des Fahrzeuges in Abhängigkeit von einem zur Bremswirkung analogen, durch Sensor überwachten Parameter steuerbar ist, derart, daß das auf die Antriebsräder übertragbare Antriebsmoment bei ansteigender Wirkung der Betriebsbremse abfällt.

Kraftzeugzeuge mit manuell geschalteten Getrieben und automatisch betätigter Kupplung sind allgemein bekannt und weden serienmäßig ausgeliefert. Aus der EP 0 375 162 A2 ist für derartige Fahrzeuge eine automatisch gesteuerte Kupplung der eingangs angegebenen Art bekannt. Dabei wird das von der Kupplung übertragbare Moment in Abhängigkeit vom Pedalweg des Bremspedales der Betriebsbremse abgesenkt, wobei zusätzlich noch der jeweils eingelegte Gang berücksichtigt wird, derart, daß die Kupplung in Abhängigkeit vom jeweils eingelegten Gang des Getriebes bei unterschiedlich großen Pedalwegen der Betriebsbremse geöffnet wird.

Bei einer automatisch gesteuerten Kupplung gemäß der EP 0 239 416 A2 wird der Druck im fluidischen Bremssystem eines Fahrzeuges erfaßt und zur Kupplungssteuerung herangezogen, wobei die Kupplung automatisch geöffnet wird, wenn die Drehzahl des Motors des Fahrzeuges einen Schwellwert unterschreitet und der Bremsdruck einen Schwellwert überschreitet.

Gemäß der Druckschrift PATENTS ABSTRACTS OF JAPAN zu JP 62-216842 (A) ist es bekannt, bei der automatischen Steuerung der Kupplung bei geringer Geschwindigkeit die Betätigung eines die Motorleistung steuernden Fahrpedales sowie einer Betriebsbremse zu berücksichtigen. Wird bei geringer Geschwindigkeit die Betriebsbremse betätigt, so öffnet die Kupplung. Falls bei geringer Geschwindigkeit keine Bremsbetätigung erfolgt, wird überprüft, ob das Fahrpedal betätigt ist, oder nicht. Falls nun weder die Betriebsbremse noch das Fahrpedal betätigt ist, wird die Kupplung auf einen halb geschlossenen Zustand eingestellt. Damit soll der Fahrbetrieb des Fahrzeuges bei dichtem Verkehr erleichtert werden.

Aus der DE-OS 26 56 888 ist es bekannt, bei einem Kriechantriebssteuersystem für ein Industriefahrzeug die Betätigung der Kupplung mit der Betätigung der Fahrzeugbremse zu koppeln. Dabei ist das fluidische Betätigungssystem der Fahrzeugbremse über ein Steuerventil, welches auf eine Druckschwelle anspricht, mit dem fluidischen Betätigungssystem der Kupplung verbunden, derart, daß das Steuerventil öffnet, sobald der zur Bremsbetätigung dienende fluidische Druck die Druckschwelle überschreitet. Der nunmehr im fluidischen Betätigungssystem der Kupplung wirkende Druck führt dann dazu, daß die Kupplung öffnet. Im Ergebnis bleibt also die Kupplung geschlossen, wenn der Bremsdruck unterhalb der Druckschwelle liegt. Übersteigt der Bremsdruck die Druckschwelle, ist die Kupplung offen. Dadurch wird erreicht, daß die Kupplung automatisch eingerückt wird, bevor ein die Fahrzeugbremse steuerndes Bremspedal vollständig losgelassen wird.

Aus der DE 44 26 260 A1 ist es bekannt, eine automatische Kupplung bei Betätigung einer Betriebsbremse des Fahrzeuges bei geringer Fahrgeschwindigkeit automatisch in Richtung Öffnen zu betätigen.

Die EP 0 482 262 A2 betrifft ein mit automatischem Getriebe ausgerüstetes Kraftfahrzeug, bei dem eine automatische Betätigung von Kupplung und Bremse vorgesehen ist, um bei vorgegebenen Betriebsphasen ein Kriechen des Fahrzeuges zu vermeiden.

Aufgabe der Erfindung ist es nun, das Betriebsverhalten eines Fahrzeuges mit automatisch gesteuerter Kupplung zu verbessern.

Diese Aufgabe wird erfindungsgemäß dadurch gelöst, daß das Kupplungsmoment analog zum Hydraulikdruck im System der Betriebsbremse abgesenkt wird, wobei die Kupplung bei Fahrgeschwindigkeiten unterhalb einer Grenzgeschwindigkeit bei einem vorgegebenen Bremsdruck und bei Fahrgeschwindigkeiten oberhalb der Grenzgeschwindigkeit bei einem dagegen erhöhten Bremsdruck vollständig öffnet.

Die Erfindung beruht auf dem allgemeinen Gedanken, die tatsächliche Bremswirkung zu überwachen und bei der automatischen Steuerung der Kupplung zu berücksichtigen.

Vorteilhafterweise kann die Erfindung mit vergleichsweise geringem konstruktiven Aufwand verwirklicht werden.

Bei heute üblichen hydraulischen Betriebsbremsen von Kraftfahrzeugen genügt es, am Hydrauliksystem der Betriebsbremse einen oder mehrere Drucksensoren anzuordnen, so daß der hydraulische Druck sowie die damit einhergehende Bremswirkung überwacht werden können. Derartige Drucksensoren sind oftmals ohnehin vorhanden, weil der hydraulische Druck im Bremssystem bereits aus anderen Gründen, etwa zur Begrenzung des Antriebschlupfes von Antriebsrädern, überwacht werden muß, wenn ein durchdrehendes Antriebsrad gegebenenfalls automatisch abgebremst werden soll.

Darüber hinaus sind die heute üblichen elektronischen Steuerungen, die in Kraftfahrzeugen zur Überwachung vielfältiger Funktionen - unter anderem auch einer automatischen Kupplung - vorhanden sind, ohne weiteres geeignet, zusätzliche Parameter - hier die Bremswirkung - zu berücksichtigen.

Zusätzlich zu Sensoren für den Bremsdruck können auch Kraftsensoren vorgesehen sein, die die Kräfte zur Betätigung der Betriebsbremse direkt oder indirekt erfassen. Darüber hinaus kann gegebenenfalls auch ein zur Bremsbetätigungskraft analoger Weg von Bremsbetätigungsorganen oder eine Stellwegdifferenz zwischen Bremsbetätigungselementen erfaßt werden. Derartige Größen sind im wesentlichen analog zur Bremswirkung.

Im übrigen ist in grundsätzlich bekannter Weise gemäß einer bevorzugten Ausführungsform der Erfindung vorgesehen, daß der Motor eine automatische Motorsteuerung aufweist, die einen Abfall der Motordrehzahl unter einen vorzugebenden Mindestsollwert, z.B. Leerlaufsolldrehzahl, verhindert bzw. einem solchen Abfall entgegensteuert. Damit ist gewährleistet, daß der Fahrzeugmotor bei gelöster Betriebsbremse nach einem Halt immer mit hinreichender Leistung arbeitet, um das fahrzeug kriechend in Bewegung setzen zu können.

Nachfolgend wird die Erfindung noch anhand der Zeichnung näher erläutert.

Dabei zeigt
- Fig. 1: ein Diagramm, welches die Bremskraft F sowie das von der Kupplung übertragbare Drehmoment M in Abhängigkeit vom Bremspedalweg s bzw. vom Weg eines sonstigen Betätigungsorgans der Betriebsbremse wiedergibt, und
- Fig. 2: ein schematisiertes Kraftfahrzeug mit erfindungsgemäßer Steuerung der Kupplung.

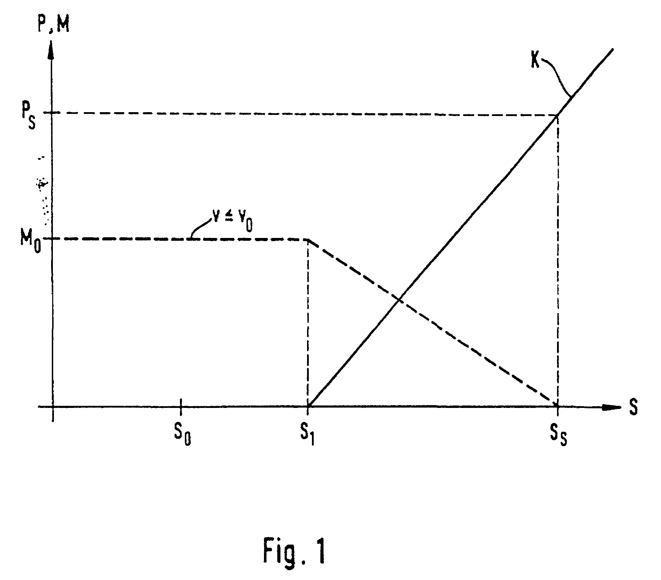

Bei nicht betätigter hydraulischer Betriebsbremse hat der hydraulische Druck P gemäß Fig. 1 den Wert 0. Nun möge das Bremspedal der Betriebsbremse betätigt werden. Solange der Stellhub s des Bremspedales geringer ist als der Wert s₁, bleibt der Hydraulikdruck P auf dem Wert 0. Bevor jedoch der Stellhub s₁ erreicht wird, wird bei einem geringeren Stellhub s₀ der Bremslichtschalter betätigt, so daß die der Betriebsbremse zugeordneten Bremslichter aufleuchten.

Sobald dann der Stellhub s den Wert s₁ überschreitet, steigt der hydraulische Druck P entsprechend einer annähernd linearen Kurve K an, deren Form von der Konstruktion der Betriebsbremse abhängig ist.

Es sei nun angenommen, daß das Fahrzeug mit sehr geringer Fahrgeschwindigkeit v fährt, die unter dem Wert v₀ liegen möge. Unterhalb dieses Schwellwertes der Fahrgeschwindigkeit arbeitet die automatische Kupplung automatisch mit einem relativ geringen Kupplungsmoment M₀, solange ein den hydraulischen Druck der Betriebsbremse überwachender Drucksensor für den Hydraulikdruck P den Wert 0 bzw. einen nahe benachbarten Wert meldet.

Sobald der Drucksensor einen Anstieg des Hydraulikdruckes P registriert, wird das Kupplungsmoment analog zum Anstieg des Hydraulikdruckes abgesenkt, bis dann bei einem Hydraulikdruck Pₛ (oder dem zugeordneten Stellhub sₛ) die automatische Kupplung ihren vollständig geöffneten Zustand erreicht, d.h. das Kupplungsmoment M auf den Wert 0 abfällt.

Im Ergebnis wird also gewährleistet, daß das auf die Antriebsräder übertragbare Antriebsmoment bei ansteigender Wirkung der Betriebsbremse abfällt. Gleichzeitig wird vermieden, daß die Kupplung bei noch fahrendem Fahrzeug bei wirkungsloser Bremse vollständig öffnen kann.

Ein vollständiges Öffnen der Kupplung bei nicht betätigter Betriebsbremse ist nur bei Stillstand des Fahrzeuges möglich, und auch nur dann, wenn das zur Leistungssteuerung des Motors dienende Fahrpedal nicht betätigt wird bzw. der Fahrzeugmotor mit Leerlaufdrehzahl oder einer geringeren Drehzahl läuft. Für diese Steuerung der automatischen Kupplung werden Signale entsprechender Sensoren - für Fahrgeschwindigkeit bzw. Motordrehzahl - herangezogen.

Sollte das Fahrzeug mit einer höheren Geschwindigkeit als v₀ fahren, kann die automatische Kupplung in grundsätzlich gleicher Weise, wie es in der Zeichnung dargestellt ist, liegen automatisch gesteuert werden. In diesem Fall wird jedoch in der Regel das bei wirkungsloser Betriebsbremse eingestellte übertragbare Drehmoment oberhalb des Wertes M₀ liegen, wobei dann des weiteren vorgesehen sein kann, die Kupplung erst dann vollständig zu öffnen, wenn der Hydraulikdruck im Bremssystem einen Wert deutlich oberhalb des Wertes Pₛ hat.

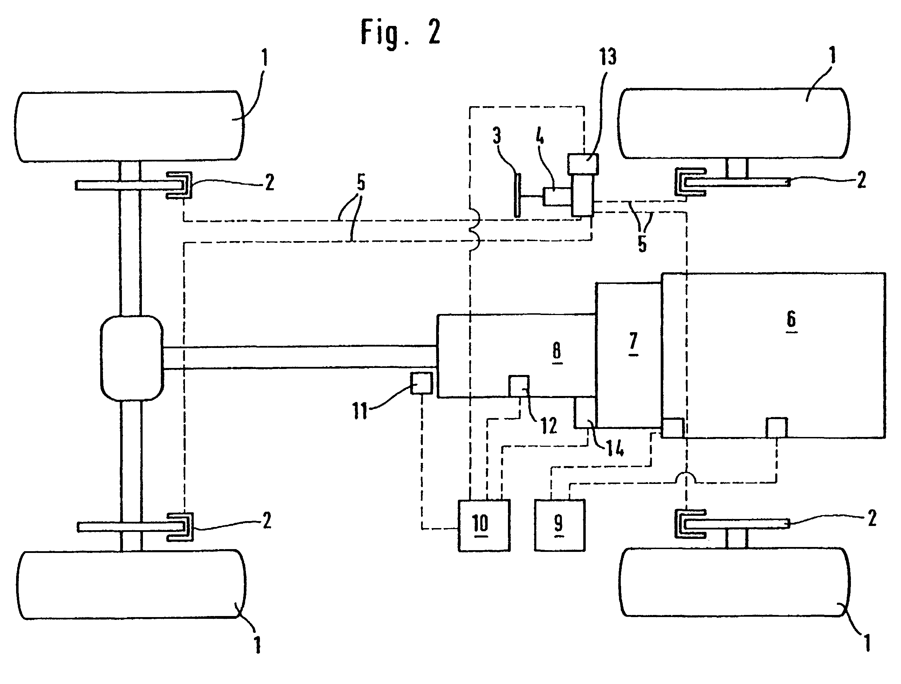

Von dem in Fig. 2 in Draufsicht dargestellten Kraftfahrzeug sind im wesentlichen nur die vorderen und hinteren Räder 1 mit den zugeordneten Bremsen 2 dargestellt, die mittels eines Bremspedals 3 betätigt werden, welches seinerseits ein hydraulisches Geberaggregat 4 betätigt, an das die Nehmeraggregate der Bremsen 2 über Hydraulikleitungen 5 antriebsmäßig angeschlossen sind.

Die Hinterräder des Fahrzeuges werden vom Fahrzeugmotor 6 über eine automatisch betätigte Kupplung 7 und ein manuell geschaltetes Getriebe 8 angetrieben.

Der Motor 6 besitzt eine automatische Motorregelung 9, die in grundsätzlich bekannter Weise arbeitet und zumindest dafür sorgt, daß die Ist-Betriebsdrehzahl des Motors 6 auch bei größerer Belastung des Motors nicht ohne weiteres unter eine Mindestsolldrehzahl - in der Regel die Leerlaufsolldrehzahl des Motors - abfallen kann. Des weiteren ist für die Kupplung 7 eine Regelschaltung 10 vorgesehen, die gegebenenfalls mit der Motorregelung 9 zu einer einzigen Regeleinheit zusammengefaßt sein kann.

Eingangsseitig ist die Regelschaltung 10 mit einem Sensor 11 für die Fahrgeschwindigkeit, z.B. einem Tachometer des Fahrzeuges, verbunden. Darüber hinaus ist die Regelschaltung 6 eingangsseitig mit einem Sensor 12 verbunden, dessen Signale die jeweils eingelegte Getriebestufe bzw. den jeweils eingelegten Gang des Getriebes 8 wiedergeben. Ein weiterer, auf der Eingangsseite der Regelschaltung 10 angeordneter Sensor 13 erzeugt Signale, die erkennen lassen, ob ausgangsseitig des Geberaggregates 4 des hydraulischen Bremssystems des Fahrzeuges ein bremswirksamer Hydraulikdruck ansteht.

Ausgangsseitig ist die Regelschaltung 10 mit einem vorzugsweise elektrischen Stellmotor 14 verbunden, der die Kupplung 7 betätigt, so daß je nach Stellhub des Motors 14 die Kupplung 7 entweder vollständig geöffnet oder vollständig geschlossen oder auf unterschiedliche übertragbare Drehmomente eingestellt wird.

Wenn die Regelschaltung 10 aufgrund der Signale des Sensors 11 "merkt", daß das Fahrzeug mit sehr geringer Geschwindigkeit fährt, wird der Stellmotor 14 so betätigt, daß die Kupplung 7 einen mehr oder weniger großen Schlupf hat. Falls dann zusätzlich aufgrund der Signale des Sensors 13 "festgestellt" wird, daß die Bremsen 2 wirksam, d.h. mit bremswirksamem Hydraulikdruck, betätigt werden, wird der Stellmotor 14 im Sinne einer Absenkung des von der Kupplung 7 übertragbaren Drehmomentes, d.h. im Sinne einer Erhöhung des Schlupfes der Kupplung 7, betätigt. Bei dieser Steuerung können zusätzlich die Signale des Sensors 12 berücksichtigt werden, um eine unterschiedliche Steuerung der Kupplung 7 bei unterschiedlichen Getriebestufen bzw. bei unterschiedlichen eingelegten Gängen des Getriebes 8 zu ermöglichen.

Der Sensor 13 kann auch eine Stellwegdifferenz und/oder den Hub von Betätigungsorganen der Fahrzeugbremse erfassen. Sowohl der Hub als auch bei Bremsbetätigung auftretende Relativverschiebungen zwischen Betätigungselementen der Bremse sind im wesentlichen analog zum Hydraulikdruck im hydraulischen System der Fahrzeugbremse.

## Patentansprüche

1. Zwischen Motor, insbesondere Verbrennungsmotor (6), und Antriebstrang (1,8) eines Kraftfahrzeuges angeordnete automatisch gesteuerte Kupplung (7), die unterhalb eines geringen Schwellwertes (v₀) der Fahrgeschwindigkeit automatisch in einen Schlupfzustand mit begrenztem übertragbaren Moment arbeitet und bei Betätigung einer Betriebsbremse (2) des Fahrzeuges in Abhängigkeit von einem zur Bremswirkung analogen, durch Sensor (10) überwachten Parameter steuerbar ist, derart, daß das auf die Antriebsräder (1) übertragbare Antriebsmoment bei ansteigender Wirkung der Betriebsbremse (2) abfällt,
**dadurch gekennzeichnet,**
**daß** das Kupplungsmoment analog zum Anstieg des Hydraulikdruckes im System der Betriebsbremse abgesenkt wird, wobei die Kupplung (7) bei Fahrgeschwindigkeiten unterhalb des Schwellwertes (v₀) bei einem vorgegebenen Bremsdruck (Pₛ) und bei Fahrgeschwindigkeiten oberhalb des Schwellwertes bei einem dagegen erhöhten Bremsdruck vollständig öffnet.

2. Steuerung nach Anspruch 1,
**dadurch gekennzeichnet,**
**daß** das Kupplungsmoment (M) bei Überschreitung eines Schwellwertes (sₛ) eines Stellweges eines Bremsbetätigungsorgans abgesenkt wird.

3. Steuerung nach Anspruch 1 oder 2,
**dadurch gekennzeichnet,**
**daß** das Kupplungsmoment (M) analog zu einer Stellwegdifferenz zwischen Betätigungselementen einer Betriebsbremse abgesenkt wird.

4. Steuerung nach einem der Ansprüche 1 bis 3,
**dadurch gekennzeichnet,**
**daß** der Motor eine automatische Motorsteuerung aufweist, die einem Abfall der Motordrehzahl unter einen geringen Schwellwert bzw. unter eine Leerlaufsolldrehzahl entgegenwirkt.

## Claims

1. Automatically controlled clutch (7), which is arranged between the engine, especially an internal combustion engine (6), and drivetrain (1, 8) of a motor vehicle and which, below a low road speed threshold (v₀), functions automatically in a slip mode with limited transmissible torque and, when a service brake (2) of the vehicle is operated, can be controlled as a function of a parameter corresponding to the braking action and monitored by sensor (10), in such a way that the drive torque transmissible to the driving wheels (1) diminishes with the progressive action of the service brake (2),
**characterized in that**
the clutch torque is reduced correspondingly with the increase in the hydraulic pressure in the service brake system, the clutch (7) being fully opened at a predetermined brake pressure (Pₛ) at driving speeds below the threshold (v₀) and at a relatively increased brake pressure at road speeds in excess of the threshold.

2. Control according to Claim 1,
**characterized in that**
the clutch toque (M) is reduced when a threshold value (sₛ) for a control travel of a brake operating member is exceeded.

3. Control according to Claim 1 or 2,
**characterized in that**
the clutch torque (M) is reduced correspondingly with a control travel difference between operating elements of a service brake.

4. Control according to one of Claims 1 to 3,
**characterized in that**
the engine has an automatic engine control, which counteracts a fall in the engine speed below a low threshold value or below a set idling speed.

## Revendications

1. Embrayage (7) commandé de façon automatique et disposé entre un moteur, en particulier un moteur à combustion (6) et un train d'entraînement (1,8) d'un véhicule à moteur, opérant, en dessous d'un seuil faible (v₀) de la vitesse de déplacement, automatiquement en un régime de glissement, avec capacité de transmission de couple limité, et qui est susceptible d'être commandé, lors de l'actionnement d'un frein (2) de voiture, en fonction d'un paramètre qui est surveillé par un capteur (10), de façon analogique à l'actionnement du frein, de façon à ce que le couple d'entraînement, susceptible à être transmis aux roues entraînées (1), diminue avec une croissance de l'effet du frein (2),
**caractérisé en ce que**
le couple d'embrayage est baissé, de façon analogique à l'accroissement de la pression hydraulique dans le système de freins, l'embrayage (7) s'ouvrant complètement, lorsque la vitesse de déplacement est inférieure au seuil (v₀) et la pression de freins correspond à une valeur prédéterminée, ou bien lorsque la vitesse de déplacement est supérieure au seuil et, par contre, la pression de freins est élevée.

2. Commande selon la revendication 1,
**caractérisée en ce que**
le couple d'embrayage (M) est baissé lorsq'un seuil (sₛ) d'un trajet de réglage d'un organe d'actionnement est dépassé.

3. Commande selon la revendication 1 ou 2,
**caractérisée en ce que**
le couple d'embrayage (M) est baissé de façon analogique à une différence de trajets de réglage entre des éléments d'actionnement d'un frein.

4. Commande selon l'une des revendications 1-3,
**caractérisée en ce que**
le moteur dispose d'une commande de moteur automatique, qui agit contre une baisse du nombre de tours du moteur en dessous d'un seuil faible, ou respectivement, en dessous du nombre de tours consigné à la marche à vide.
